(19) **Europäisches Patentamt / European Patent Office / Office européen des brevets**

(11) **EP 1 442 535 B1**

(12) **EUROPEAN PATENT SPECIFICATION**

(45) Date of publication and mention
of the grant of the patent:
**19.03.2008 Bulletin 2008/12**

(21) Application number: **02793828.1**

(22) Date of filing: **25.10.2002**

(51) Int Cl.:
***H04B 7/00*** *(2006.01)*

(86) International application number:
**PCT/US2002/034329**

(87) International publication number:
**WO 2003/036814 (01.05.2003 Gazette 2003/18)**

(54) **CONTROLLING FORWARD LINK TRANSMISSION POWER**

SENDELEISTUNGSREGELUNG DER ABWÄRTSRICHTUNG

REGLAGE DE LA PUISSANCE D'EMISSION EN LIAISON AVAL

(84) Designated Contracting States:
**AT BE BG CH CY CZ DE DK EE ES FI FR GB GR
IE IT LI LU MC NL PT SE SK TR**

(30) Priority: **25.10.2001 US 343053 P
08.10.2002 US 267527**

(43) Date of publication of application:
**04.08.2004 Bulletin 2004/32**

(73) Proprietor: **QUALCOMM INCORPORATED
San Diego, CA 92121 (US)**

(72) Inventor: **MALLADI, Durga
San Diego, CA 92128 (US)**

(74) Representative: **Heselberger, Johannes et al
Patent- und Rechtsanwälte
Bardehle . Pagenberg . Dost .
Altenburg . Geissler
Postfach 86 06 20
81633 München (DE)**

(56) References cited:
**EP-A- 1 098 456          US-A- 5 907 809
US-A- 5 918 176**

**Description**

**BACKGROUND OF THE INVENTION**

**I. Field of the Invention**

The present invention generally relates to wireless communications networks. More particularly, the present invention relates to apparatus and method for efficient interference management.

**II. Background Art**

There are a variety of wireless communication systems having multiple beam communication links. A satellite-based communication system is one such example. Another example is a cellular communication system.

A satellite-based communication system includes one or more satellites to relay communications signals between gateways (also referred to as "communication stations") and user terminals. Gateways provide communication links for connecting a user terminal to other user terminals or users of other communications systems, such as a public switched telephone network. User terminals can be fixed or mobile, such as a mobile telephone, and positioned near a gateway or remotely located.

A satellite can receive signals from and transmit signals to a user terminal provided the user terminal is within the "footprint" of the satellite. The footprint of a satellite is the geographic region on the surface of the earth covered by the satellite communication system. In some satellite systems, a satellite's footprint is geographically divided into "beams," through the use of beam forming antennas. Each beam covers a particular geographic region within a satellite's footprint.

Some satellite communications systems employ code division multiple access (CDMA) spread-spectrum signals, as disclosed in U.S. Patent No. 4,901,307, issued February 13, 1990, entitled *"Spread Spectrum Multiple Access Communication System Using Satellite or Terrestrial Repeaters,"* and U.S. Patent No. 5,691,174, which issued November 25, 1997, entitled *"Method and Apparatus for Using Full Spectrum Transmitted Power in a Spread Spectrum Communication System for Tracking Individual Recipient Phase Time and Energy,"* both of which are assigned to the assignee of the present invention, and are incorporated herein by reference in their entirety.

The method for providing CDMA mobile communications was standardized in the United States by the Telecommunications Industry Association in TIA/EIA/IS-95-A entitled *"Mobile Station-Base Station Compatibility Standard for Dual-Mode Wideband Spread Spectrum Cellular System, "* referred to herein as IS-95. Combined AMPS & CDMA systems are described in TIA/EIA Standard IS-98. Other communications systems are described in the IMT-2000/UM, or International Mobile Telecommunications System 2000/Universal Mobile Telecommunications System, standards covering what are referred to as wideband CDMA (WCDMA), cdma2000 (such as cdma2000 1x or 3x standards, for example) or TD-SCDMA.

In US 5,907,809 a user terminal is described which is able to measure the relative signal strength of signals received from a plurality of spot beams, in order to determine the position of the terminal. In US 5,918,176 a system is described wherein an information about the position of the terminal is used for foreseeing areas with degraded coverage in order to adapt the power of the signals correspondingly.

EP-1 098 456 discloses a closed loop power control method for a LEO communication system.

In communications systems employing multiple beams, transmissions received by users in a particular beam are susceptible to interference from transmissions designated for neighboring beams. In addition, the closer a user is to an adjacent beam, the more susceptible the user is to interference from neighboring beams. Interference is commonly measured in terms of a signal-to-noise ratio (SNR).

In a satellite-based communications system where the satellites are not stationary with respect to a point on the surface of the earth, the geographic area covered by a given satellite is constantly changing. As a result, a user terminal that was at one time positioned within a particular beam of a particular satellite can at a later time be positioned within a different beam of the same satellite and/or within a different beam of a different satellite. Furthermore, because satellite communication is wireless, a user terminal is free to move about. Accordingly, a user terminal may experience varying levels of interference susceptibility while engaging in communications with one or more satellites.

A similar interference problem may occur for mobile users moving around in cells in a terrestrial cellular communication system. That is, mobile user terminals engaging in wireless communications may move within a cell or repeatedly cross cell boundaries.

One technique for reducing interference received by user terminals is to boost the power of signals that are transmitted by satellites and/or cellular base stations to user terminals. However, since user terminals can experience varying degrees of interference susceptibility, this approach has the drawback of wasting power on users that are not as susceptible to interference as others.

In systems having limited power budgets, such as satellite communications systems, a technique is needed for maintaining a constant SNR while conserving transmit power.

## SUMMARY OF THE INVENTION

The present invention is directed to systems and methods for controlling forward link transmission power to a user terminal in a wireless communications system having a plurality of beams. The systems and methods identify the location of a user terminal within one of the plurality of beams, and set the forward link transmission power in response to the identified user terminal location.

Identifying the location of a user terminal may include receiving from the user terminal multiple signal power measurements, such as pilot signal measurements. Each of these measurements corresponds to one of the plurality of beams. For example, these measurements may be in the form of a pilot strength measurement message (PSMM).

Upon receipt of these measurements, a difference is calculated between a first of the signal power measurements that corresponds to a home beam and each of the other signal power measurements. If the largest of the calculated differences is greater than a predetermined threshold, it is concluded that the user terminal is within a beam central region. However, if the largest of the calculated differences is less than or equal to the predetermined threshold, then it is concluded that the user terminal is within a beam crossover region.

A system of the present invention includes a selector adapted to identify the location of a user terminal within a beam. In response to this identification, the selector generates a power control command based on the identified location. The selector sets the forward link transmission power in response to the power control command.

The transceiver includes a gain module that is adapted to scale a forward link information sequence according to a power level designated by the power control command. The power control command may designate a first power level when the identified location is within a beam crossover region and a second power level when the identified location is within a beam central region.

An advantage of the present invention is that it keeps interference levels within acceptable ranges, while conserving transmit power.

## BRIEF DESCRIPTION OF THE DRAWINGS

The present invention is described with reference to the accompanying drawings. In the drawings, like reference numbers indicate identical or functionally similar elements. Additionally, the left-most digit(s) of a reference number identifies the drawing in which the reference number first appears.

FIG. 1 illustrates an exemplary wireless communication system;

FIG. 2 is a diagram illustrating an exemplary footprint having a plurality of beams;

FIG. 3 is a diagram illustrating an operational scenario within a satellite footprint;

FIGS. 4-6 are flowcharts illustrating operational sequences of the present invention;

FIG. 7 is a block diagram of an exemplary gateway implementation; and

FIG. 8 is a block diagram of a forward link transceiver implementation.

## DETAILED DESCRIPTION OF EMBODIMENTS OF THE INVENTION

### I. Exemplary Operational Environment

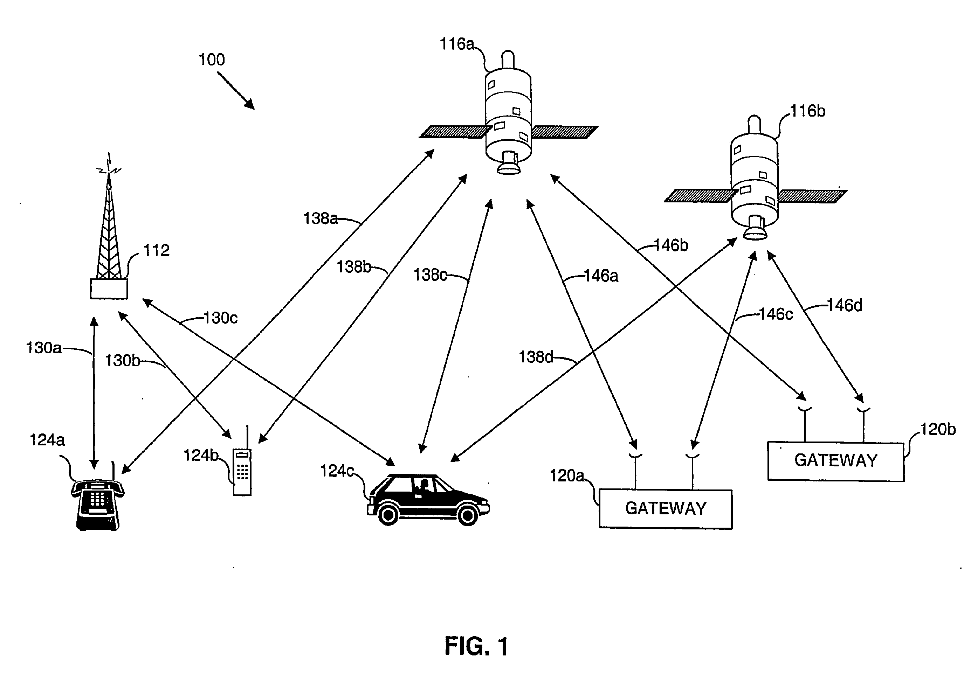

Before describing the invention in detail, it is helpful to describe an example environment in which the invention may be implemented. The present invention is particularly useful in mobile communications environments. FIG. 1 illustrates such an environment.

FIG. 1 is a block diagram of an exemplary wireless communication system (WCS) 100 that includes a base station 112, two satellites 116a and 116b, and two associated gateways (also referred to herein as hubs) 120a and 120b. These elements engage in wireless communications with user terminals 124a, 124b, and 124c. Typically, base stations and satellites/gateways are components of distinct terrestrial and satellite based communication systems. However, these distinct systems may interoperate as an overall communications infrastructure.

Although FIG. 1 illustrates a single base station 112, two satellites 116, and two gateways 120, any number of these elements may be employed to achieve a desired communications capacity and geographic scope. For example, an exemplary implementation of WCS 100 includes 48 or more satellites, traveling in eight different orbital planes in Low Earth Orbit (LEO) to service a large number of user terminals 124.

The terms base station and gateway are also sometimes used interchangeably, each being a fixed central communication station, with gateways, such as gateways 120, being perceived in the art as highly specialized base stations that direct communications through satellite repeaters while base stations (also sometimes referred to as cellsites), such as base station 112, use terrestrial antennas to direct communications within surrounding geographical regions. However, the invention is not limited to specific multiple access communication systems, and may be employed in other types of systems that employ other access techniques.

In this example, user terminals 124 each have or include apparatus or a wireless communication device such as, but not limited to, a cellular telephone, wireless handset, a data transceiver, or a paging or position determination receiver. Furthermore each of user terminals 124 can be hand-held, portable as in vehicle-mounted (including for example cars, trucks, boats, trains, and planes), or fixed, as desired. For example, FIG. 1 illustrates user terminal 124a as a fixed telephone, user terminal 124b as a hand-held device, and user terminal 124c as a vehicle-mounted device. Wireless communication devices are also sometimes referred to as user terminals, mobile stations, mobile units, subscriber units, mobile radios or radiotelephones, wireless units, or simply as 'users,' 'subscribers,' 'terminals,' and 'mobiles' in some communication systems, depending on preference.

User terminals 124 engage in wireless communications with other elements in WCS 100 through CDMA communications systems. However, the present invention may be employed in systems that employ other communications techniques, such as time division multiple access (TDMA), and frequency division multiple access (FDMA), or other waveforms or techniques listed above (WCDMA, CDMA2000 ....).

Generally, beams from a beam source, such as base station 112 or satellites 116, cover different geographical areas in predefined patterns. Beams at different frequencies, also referred to as CDMA channels, frequency division multiplexed (FDM) channels, or 'sub-beams', can be directed to overlap the same region. It is also readily understood by those skilled in the art that beam coverage or service areas for multiple satellites, or antenna patterns for multiple base stations, might be designed to overlap completely or partially in a given region depending on the communication system design and the type of service being offered, and whether space diversity is being achieved.

FIG. 1 illustrates several exemplary signal paths. For example, communication links 130a-c provide for the exchange of signals between base station 112 and user terminals 124. Similarly, communications links 138a-d provide for the exchange of signals between satellites 116 and user terminals 124. Communications between satellites 116 and gateways 120 are facilitated by communications links 146a-d.

User terminals 124 are capable of engaging in bi-directional communications with base station 112 and/or satellites 116. As such, communications links 130 and 138 each include a forward link and a reverse link. A forward link conveys information signals to user terminals 124. For terrestrial-based communications in WCS 100, a forward link conveys information signals from base station 112 to a user terminal 124 over a link 130. A satellite-based forward link in the context of WCS 100 conveys information from a gateway 120 to a satellite 116 across a link 146 and from the satellite 116 to a user terminal 124 over a link 138. Thus, terrestrial-based links typically involve a single wireless signal path between the user terminal and base station, while satellite-based links typically involve two, or more, wireless signal paths between the user terminal and a gateway through at least one satellite (ignoring multipath).

In the context of WCS 100, a reverse link conveys information signals from a user terminal 124 to either a base station 112 or a gateway 120. Similar to forward links in WCS 100, reverse links typically require a single wireless connection for terrestrial-based communications and two wireless connections for satellite-based communications. WCS 100 may feature different communications offerings across these forward links, such as low data rate (LDR) and high data rate (HDR) services. An exemplary LDR service provides forward links having data rates from 3 kilobits per second (kbps) to 9.6 kbps, while an exemplary HDR service supports typical data rates as high as 604 kbps or more.

HDR service may be bursty in nature. That is, traffic transferred across HDR links may suddenly begin and end in an unpredictable fashion. Thus, in one instant, an HDR link may be operating at zero kbps, and in the next moment operating at a very high data rate, such as 604 kbps.

As described above, WCS 100 performs wireless communications according to CDMA techniques. Thus, signals transmitted across the forward and reverse links of links 130, 138, and 146 convey signals that are encoded, spread, and channelized according to CDMA transmission standards. In addition, block interleaving is employed across these forward and reverse links. These blocks are transmitted in frames having a predetermined duration, such as 20 milliseconds.

Base station 112, satellites 116, and gateways 120 may adjust the power of the signals that they transmit across the forward links of WCS 100. Exemplary embodiments for power control loops used in a CDMA communication system are disclosed in U.S. Patent No. 5,056,109, entitled *"Method And Apparatus For Controlling Transmission Power In A CDMA Cellular Mobile Telephone System"*, assigned to the assignee of the present invention and incorporated by reference herein. Other power control mechanism can also be contemplated and are within the scope of the present invention.

The transmission power (referred to herein as forward link transmit power) may be varied according to commands, requests, or feedback from user terminal 124 and according to time. This time varying feature may be employed on a frame-by-frame basis. Alternatively, this feature may be employed on other time boundaries that are either larger or smaller than a frame. Such power adjustments are performed to maintain forward link frame error rates (FER) within specific requirements, reduce interference, and conserve transmission power.

For example, gateway 120a, through satellite 116a, may transmit signals to user terminal 124b at a different forward link transmission power than it does for user terminal 124c. Additionally, gateway 120a may vary the transmit power of each of the forward links to user terminals 124b and 124c for each successive frame.

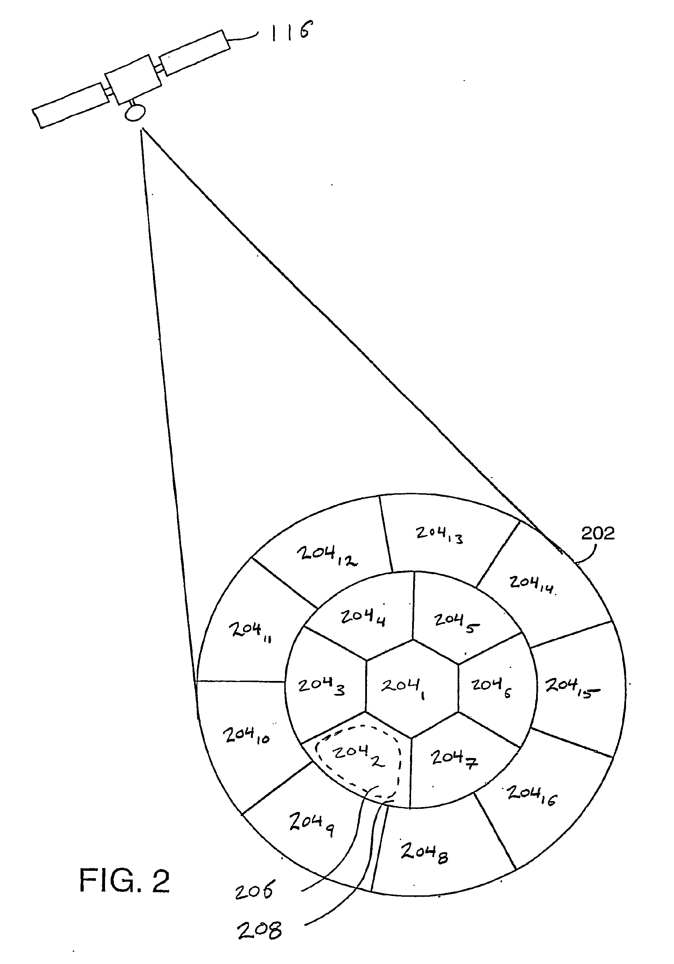

FIG. 2 illustrates an exemplary satellite beam pattern 202, also known as a footprint. As shown in FIG. 2, the exemplary satellite footprint 202 includes sixteen beams $204_1$-$204_{16}$. Each beam covers a specific geographical area, although there usually is some beam overlap. The satellite footprint shown in FIG. 2 includes an inner beam (beam $204_1$), middle beams (beams $204_2$-$204_7$), and outer beams (beams $204_8$-$204_{16}$). Beam pattern 202 is a configuration of particular predefined gain patterns that are each associated with a particular beam 204.

Beams 204 are illustrated as having non-overlapping geometric shapes for purposes of illustration only. In fact, beams 204 each have gain pattern contours that extend well beyond the idealized boundaries shown in FIG. 2. However, these gain patterns are attenuated beyond these illustrated boundaries such that they do not typically provide significant gain to support communications with user terminals 124 outside of a given "boundary."

Beams 204 may each be considered to have different regions based on their proximity to other beam(s) and/or position within other beam gain pattern(s). For example, FIG. 2 illustrates beam $204_2$ having a central region 206 and a crossover region 208. Crossover region 208 includes portions of beam $204_2$ that are in close proximity to beams $204_1$, $204_3$, $204_7$, $204_8$, $204_9$, and $204_{10}$. Because of this proximity, user terminals 124 within crossover region 208 (as well as similar regions in other beams) are more likely to handoff to an adjacent beam, than are user terminals 124 in central region 206. However, user terminals 124 within handoff probable regions, such as crossover region 208, are also more likely to receive interference from communications links in adjacent beams 204.

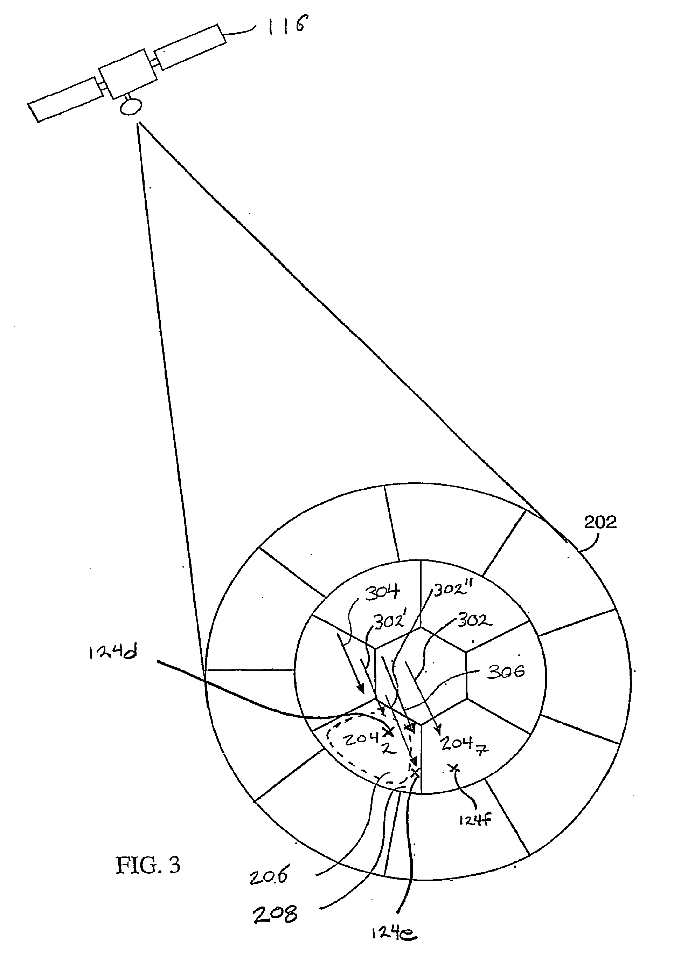

To illustrate this principle, FIG. 3 shows an exemplary operational scenario within footprint 202. This operational scenario involves user terminals 124d-f communicating through different beams of a satellite 116. In particular, user terminals 124d and 124e are communicating with satellite 116 through beam $204_2$, while user terminal 124f is communicating with satellite 116 through beam $204_7$. As shown in FIG. 3, user terminal 124d is within central region 206 of beam $204_2$ and user terminal 124e is within crossover region 208 of beam $204_2$.

As described above, crossover region 208 is closer to beam $204_7$ than is central region 206. Because of this proximity, user terminal 124e within crossover region 208 can be within a higher gain portion of the beam $204_7$ gain pattern than can user terminal 124d within central region 206. For instance, in the operational scenario of FIG. 3, user terminal 124f receives a forward link transmission 302 from satellite 116. In addition, user terminals 124d and 124e receive this transmission as attenuated transmissions 302' and 302". Although both signals are weaker than transmission 302, transmission 302" is stronger than transmission 302'.

In addition to receiving these attenuated transmissions, user terminals 124d and 124e also receive forward link transmissions from satellite 116 that are intended for their reception. In particular, user terminal 124d receives a forward link transmission 304 from satellite 116 and user terminal 124e receives a forward link transmission 306 from satellite 116.

In the context of exemplary WCS 100, downlink CDMA transmissions within a particular beam 204 are orthogonally encoded. That is, they are not generally interfering with each other. However, downlink CDMA transmissions from different beams are not necessarily orthogonal. Downlink transmissions from different beams 204 can interfere with each other. Thus, in the operational scenario of FIG. 3, the reception of transmission 304 is susceptible to interference from transmission 302'. Similarly, the reception of transmission 306 is susceptible to interference from transmission 302".

As described herein, transmission 302" has a stronger signal strength than transmission 302'. Accordingly, within the scenario of FIG. 3, the reception of transmission 306 by user terminal 124e is susceptible to a greater amount of interference than is the reception of transmission 304 by user terminal 124d. The present embodiment applies this principle to reduce such interference while conserving link transmit power.

## II. Efficient Interference Management

The invention provides efficient interference management techniques through the control of link transmit power. As described above, wireless communications systems, such as WCS 100, include components, such as satellites 116, that have limited transmit power budgets. This budgeted power must be efficiently allocated to multiple communications links. However, if too little power is allocated to a link, noise and interference will prevent the link from supporting communications traffic. Accordingly, embodiments maintain interference levels within acceptable ranges while conserving transmit power.

Communications systems, such as WCS 100, specify certain maximum bit error rates (BERs) and/or packet error rates (PERs) for their wireless communications links. For a link to perform as intended, these error rates must not be exceeded. A link's error rates depend on a ratio of power levels expressed below in Equation (1).

$$\frac{E_b}{N_t} \qquad\qquad (1)$$

In Equation (1), $E_b$ represents the energy per transmitted bit and $N_t$ represents a noise energy. $N_t$ has two components: $N_0$ and $I_t$. $N_0$ represents thermal noise and $I_t$ represents interference power spectral density.

$N_o$ is relatively constant in wireless communications environments, such as the environment of WCS 100. However, $I_t$ can vary greatly. Since $I_t$ can vary greatly, the ratio of Equation (1), as well as the associated link error rates, can fluctuate across a large range of values.

The reason for such fluctuations is described with reference to Equation (2), below. Equation (2) expresses the interference noise component, $I_{t,i}$, that a user, i, receives from the forward link of a set of interfering users (indexed by the variable j).

$$I_{t,i} = \sum_{j \neq i} \frac{P_j \cdot R_j}{W} \qquad\qquad (2)$$

In Equation (2), $P_j$ is the forward link transmit power directed to a user, $j$, $Rj$ is the data rate of the forward link power to user $j$, and $W$ is the CDMA spreading bandwidth.

As expressed in Equation (2), the contribution of an adjacent beam user to the forward link interference noise component is directly proportional to the adjacent beam user's forward link data rate, $R_j$. Accordingly, as forward link data rates increase, the interference noise component, $I_t$, of $N_t$ becomes progressively dominant over the corresponding thermal noise component, No.

**[0056]** As described herein with reference to FIG. 1, WCS 100 may offer both LDR and HDR services. Because of its substantially lower data rate, interference noise variations from LDR links are relatively small when compared to interference noise variations from HDR links that transfer bursty traffic.

To make sure that interference fluctuations do not compromise communications across wireless links, conventional systems transmit at a higher power to make sure that the interference from adjacent cell forward links do not predominate. Thus, within the context of WCS 100, a conventional approach to maintaining forward links would involve gateways 120 and base station 112 transmitting at higher power levels that are conservatively estimated in the face of fluctuating interference levels to keep link error rates within acceptable ranges. Unfortunately, such approaches do not conserve transmit power.

The higher power level described above is greater than the minimum power level necessary to support a link in the absence of interference. The difference between these two power levels is referred to herein as a power margin. The example embodiment minimizes the power margin allocated to each forward link.

As described above with reference to the operational scenario of FIG. 3, the location of a user terminal 124 within a beam 204 affects its susceptibility to interference. More specifically, a user near a beam crossover region, such as crossover region 208 receives more interference than a user in a central region, such as central region 206. Therefore, to combat interference, a user terminal 124 in a central region requires a smaller power margin than a user in a crossover region.

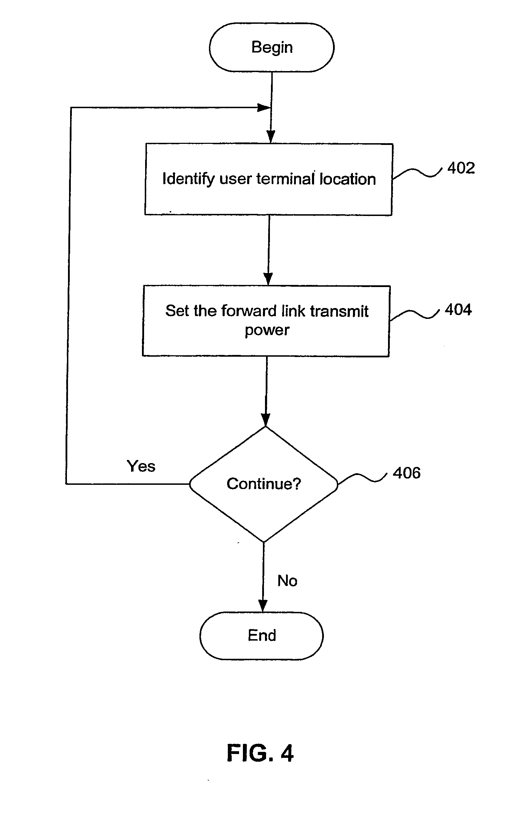

Accordingly, the present invention determines forward link transmit power levels from the locations of corresponding user terminals 124 within their respective beams 204. FIG. 4 is a flowchart illustrating an operational sequence of the present invention. This operational sequence is described with reference to a gateway 120 controlling the forward link transmit power to a particular user terminal 124. However, a base station 112 may also perform this operational sequence.

This operational sequence begins with a step 402. In step 402, gateway 120 identifies the location of a user terminal 124 within a beam 402. Next, in a step 404, for the forward link directed to the user terminal 124, gateway 120 sets the transmit power in response to the identified user terminal 124 location.

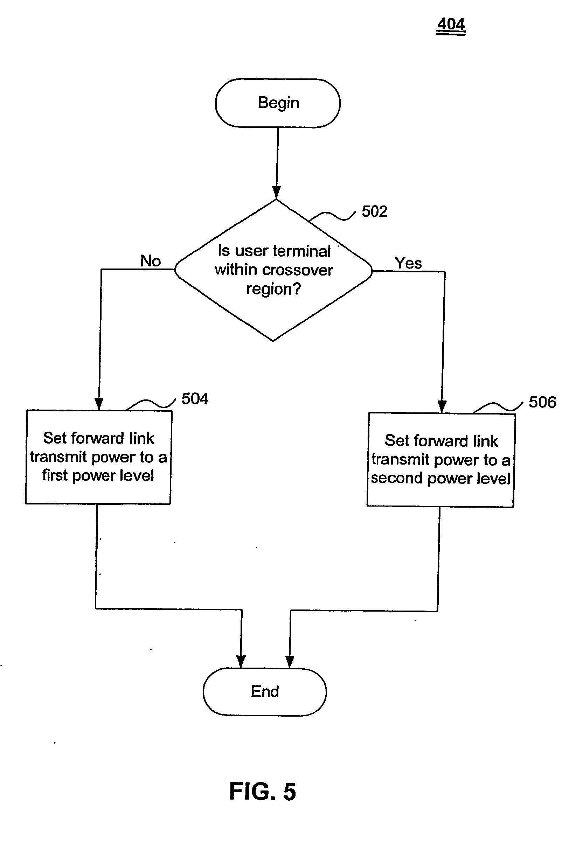

FIG. 5 is a flowchart illustrating a performance of step 404 in greater detail. As shown in FIG. 5, step 404 may include a step 502 that determines whether the user terminal 124 is within a crossover region, such as crossover region 208. If the user terminal 124 is within a crossover region, then a step 504 follows. Otherwise a step 506 is performed.

In step 504, gateway 120 sets the transmit power of the forward link directed to user terminal 124 to a first power level. Alternatively, in step 506, gateway 120 sets the transmit power of the forward link directed to user terminal 124 to a second power level. Since forward links directed to user terminals 124 in central regions require less power than forward links directed to users in crossover regions, the second power level is greater than the first power level.

A crossover region may be a region that includes predetermined relative geographic positions with respect to the geographic location of the satellite footprint. However, in the face of large interference power fluctuations associated with bursty high data rate traffic, typical communications systems cannot provide gateways 120 and base stations 112 with user terminal 124 geographic locations quickly enough. To overcome this difficulty, the present invention employs differential power metrics to estimate user terminal 124 locations.

These differential power metrics are derived from a set of power measurements that each user terminal 124 periodically performs to evaluate whether it should "handoff" to another beam. These measurements are pilot signal power measurements. Pilot signals are signals that are always transmitted by gateways 120 and base stations 112. Pilot signals allow a user terminal 124 to acquire the timing and phase of forward link channels.

With reference to FIG. 2, satellite 116 relays a distinct pilot signal in each beam 204. Each user terminal 124 within footprint 202 measures the power of each pilot signal it receives and periodically reports these powers to the corresponding gateway 120 (or the corresponding base station 112 in a terrestrial environment). This periodic report may be in the form of a standard formatted message called a pilot strength measurement message (PSMM). Alternatively, these measurements may be conveyed using other types of signals such as a paging message.

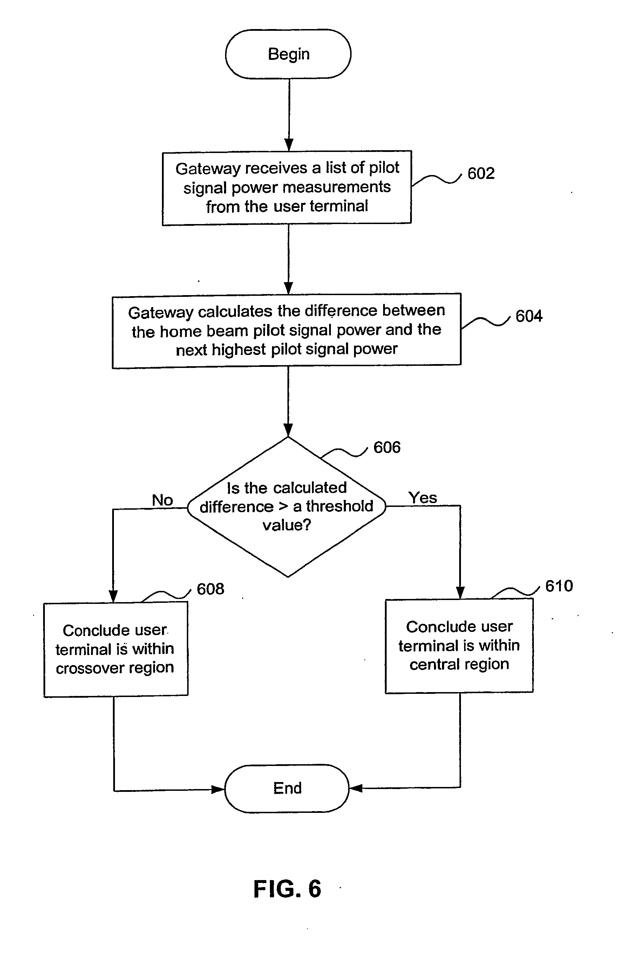

To determine the position of a user terminal 124 within a beam 204, gateway 124 compares the values of the power measurements in the periodic report. FIG. 6 is a flowchart illustrating an operational sequence of step 402 that employs this differential power metric approach.

The operational sequence of FIG. 6 begins with a step 602. In step 602, gateway 120 receives a list of pilot signal power measurements from user terminal 124 in the form of a PSMM. Next, in a step 604, gateway 120 calculates the difference between the pilot signal power associated with the beam 204 that the user terminal 124 is assigned to (also referred to herein as "the home beam" or "the active beam"), and the next highest pilot signal power in the received list.

In a step 606, gateway 120 determines whether the difference calculated in step 604 is greater than a threshold, such as 6 dB. If so, then a step 610 is performed. Otherwise, a step 608 is performed. In step 610, gateway 120 concludes that user terminal 124 is within a central region, such as central region 206. Alternatively, in step 608, gateway 120 determines that user terminal 124 is within a crossover region, such as crossover region 208.

Step 608 and 610 are followed by the performance of step 404, where gateway 120 sets the forward link transmit power. As described above with reference to FIG. 5, step 404, may include setting the forward link transmit power to a first power level when user terminal 124 is within a beam crossover region. Alternatively, step 404 may include setting the forward link transmit power to a second power level when user terminal 124 is not within a beam crossover region.

## III. Exemplary Gateway Implementation

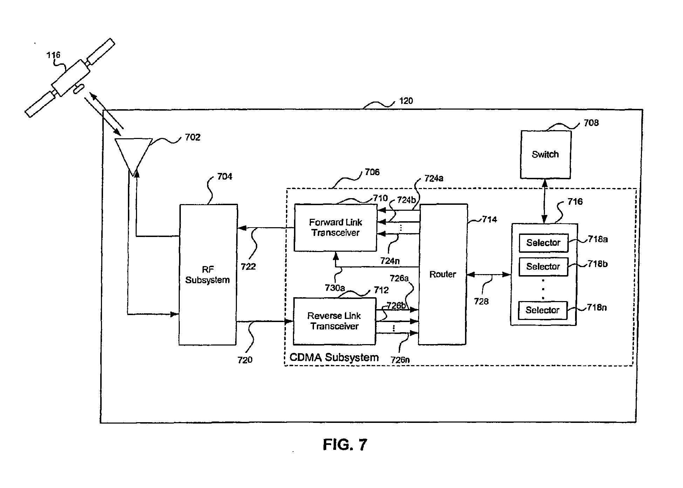

FIG. 7 is a block diagram of an exemplary gateway 120 implementation that performs the techniques described herein. Although described in the context of satellite communications, this exemplary implementation may also be employed in cellular base stations, such as base station 112 of FIG. 1. As shown in FIG. 7, this implementation includes an antenna segment 702 that is coupled to a radio frequency (RF) subsystem 704, and a CDMA subsystem 706 that is coupled to RF subsystem 704. In addition, gateway 120 further includes a switch 708 that is coupled to CDMA subsystem 706.

Antenna segment 702 includes one or more antennas that exchange RF signals with one or more user terminals 124 through satellite(s) 116. In particular, antenna segment 702 receives reverse link RF signals and transmits forward link RF signals. To enable the transmission and reception of RF signals through a single antenna, antenna segment 702 may also include a diplexer (not shown).

RF subsystem 704 receives electrical signals from antenna segment 702 within an RF frequency band. Upon reception, RF subsystem 704 down converts these electrical signals from the RF frequency band to an intermediate frequency (IF). In addition, RF subsystem 704 may filter the electrical signals received from antenna segment 702 in accordance with a predetermined bandwidth.

To increase the power of the RF signals received from antenna segment 702, RF subsystem 704 also includes known amplification components (not shown). Exemplary amplification components include a low noise amplifier (LNA) that initially amplifies signals received from antenna segment 702, and a variable gain amplifier (VGA) that further amplifies these signals after they are mixed down to IF during the aforementioned down conversion process.

As a result of these filtering, down conversion, and amplification operations, RF subsystem 704 produces an IF signal 720 that is sent to a reverse link transceiver 712 within CDMA subsystem 706.

In addition to receiving reverse link RF signals from antenna segment 702, RF subsystem 704 receives a forward link IF signal 722 from a forward link transceiver 710 within CDMA subsystem 706. RF subsystem 704 amplifies and up converts this signal into a corresponding RF signal for transmission by antenna segment 702.

As shown in FIG. 7, CDMA subsystem 706 includes a forward link transceiver 710, a reverse link transceiver 712, a router 714, and a selector bank subsystem (SBS) 716. As described above, transceivers 710 and 712 exchange IF signals 720 and 722 with RF subsystem 704. In addition, transceivers 710 and 712 perform CDMA operations.

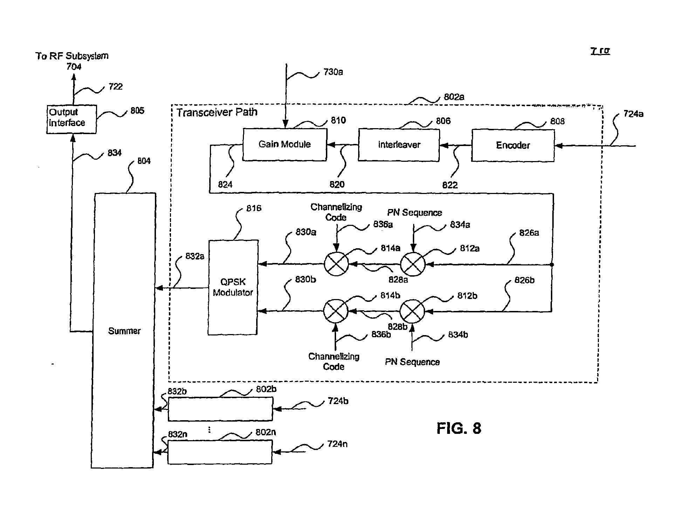

In particular, forward link transceiver 710 receives one or more forward link information sequences 724 from router 714. Upon reception, forward link transceiver 710 converts these sequences into IF signal 722, which is in a CDMA transmission format. This conversion is described in greater detail below with reference to FIG. 8.

Reverse link transceiver 712 converts IF signal 720, which is in a CDMA transmission format, into information sequences 726a-726n. For example, forward link transceiver 710 despreads and decovers IF signal 720 with one or more PN sequences and channelizing codes. In addition, forward link transceiver 710 may perform decoding and deinterleaving operations to produce information sequences 726, which are sent to router 714.

Router 714 handles the transfer of information sequences 724 and 726, which may be in the form of packets, between SBS 716 and transceivers 710 and 712. This transfer is performed across interface 728, which may be a data network, such as a local area network (LAN), or any other well known mechanism for transferring information.

SBS 716 processes the forward link and reverse link traffic handled by gateway 120. This traffic includes both payload traffic and signaling traffic. For example, SBS 716 exchanges signaling traffic in the performance of call processing operations, such as call setup, call teardown, and beam hand-offs. SBS 716 can also forward traffic to switch 708, which provides an interface to the public switched telephone network (PSTN).

SBS 716 includes a plurality of selectors 718a-n for processing forward and reverse link traffic. Each selector 718 handles active communications for a corresponding user terminal 124. However, selectors 718 may be reassigned to other user terminals 124 upon the termination of such active communications. For example, selectors 718 evaluate PSMMs sent from user terminals 124 to determine their locations within beams.

Each selector 718 may be implemented through hardware techniques, and/or in a software-controlled processor programmed to perform the functions described herein. Such implementations may include well known standard elements or generalized function or general purpose hardware including a variety of programmable electronic devices, or computers that operate under the control of commands, firmware, or software instructions to perform the desired functions. Examples include a software-controlled controller, a microprocessor, one or more digital signal processors (DSP), dedicated function circuit modules, and application specific integrated circuits (ASICs). Accordingly, power control command 730a may include one or more software instructions transferred between selector 718a and gain module 810.

Each selector 718 controls forward link power control operations. To adjust the power of forward link transmissions, selectors 718 each send a power control command 730 to forward link transceiver 710. Power control commands 730 each designate a forward link transmit power. In response to these commands, forward link transceiver 710 sets the transmit power for the forward links controlled by the selectors 718 originating these commands.

For example, selector 718a generates a power control command 730a that is sent to transceiver 710 through interface 728 and router 714. Upon receipt of power control command 730a, forward link transceiver 710 sets the power of the forward link controlled by selector 718a. Details regarding this feature are described below with reference to FIG. 8.

Accordingly, each selector 718 operates with forward link transceiver 710 to perform the steps shown in FIGS. 4-6. For example, as described above with reference to step 402, each selector 718 identifies the location of user terminals 124 within beam patterns. This identification may include receiving lists of signal strength measurements, such as PSMMs, through reverse link transmissions, and processing these measurements to determine whether user terminals 124 are within central regions or crossover regions, as described above with reference to steps 602-610 in FIG. 6.

Additionally, each selector 718 operates with forward link transceiver 710 to set forward link transmit powers in response to the identified user terminal 124 locations. Thus, these components perform step 404.

As described above, this performance may include performing steps 502-506 of FIG. 5. Selectors 718 each perform step 502, which determines whether a user terminal 124 is within a crossover region. In steps 504 and 506, forward link transmit power is set according to the results of step 502. Therefore, these steps each include a selector 718 generating a power control command 730 and sending the command to forward link transceiver 710. Moreover, steps 504 and 506 each include forward link transceiver 710 receiving a corresponding power control command 730 and, in response, setting the associated forward link transmit power.

FIG. 8 is a block diagram of a forward link transceiver 710 implementation. As shown in FIG. 8, transceiver 710 includes a plurality of transceiver paths 802a-802n, a summer 804, and an output interface 805. Each transceiver path 802 receives a forward link information sequence 724 and a power control command 730 from a corresponding selector 718. Although FIG. 8 only shows implementation details for transceiver path 802a, transceiver paths 802b-802n may include similar or identical features.

As shown in FIG. 8, transceiver path 802a includes an interleaver 806, an encoder 808, and a gain module 810. Interleaver 806 receives an information sequence 724, and block interleaves this sequence to produce an interleaved sequence 820. Encoder 808 receives sequence 820, and performs error correction encoding on this sequence to produce an encoded information sequence 822.

Gain module 810 receives encoded sequence 822, which is a forward link information sequence. Additionally, gain module 810 receives power control command 730a from selector 718a. Gain module 810 scales encoded sequence 822 based on the transmit power level designated by power control command 730a. Thus, gain module 810 may increase or decrease the power of encoded sequence 822. This scaling produces a scaled sequence 824.

Interleaved sequence 820 is a sequence of digital symbols. This sequence may be scaled by multiplying each of the symbols with a gain factor determined by power control command 730. Such scaling operations may be implemented digitally through hardware techniques, and/or software instructions operating on a microprocessor such as a digital signal processor (DSP). Accordingly, power control command 730a may include one or more software instructions transferred between selector 718a and gain module 810.

As shown in FIG. 8, transceiver path 802 further includes spreading combiners 812a-812b, channelizing combiners 814a-814b, and a quadrature phase shift keying (QPSK) modulator 816. Spreading combiners 812a-812b each receive scaled sequence 824 and combine (for example, multiply) this sequence with a respective PN sequence 834 to produce spread sequences 828a and 828b.

Spread sequences 828a and 828b are each sent to a respective channelizing combiner 814. Each channelizing combiner 814 combines (for example, multiplies) the corresponding spread sequence 828 with a channelzing code, such as a Walsh code. As a result, combiners 814 each produce a channelized sequence 830. In particular, combiner 814a produces an in-phase (I) channelized sequence 830a and combiner 814b produces a quadrature (Q) channelized sequence 830b.

Channelized sequences 830a and 830b are sent to QPSK modulator 816. QPSK modulator 816 modulates these sequences to generate a modulated waveform 832a. Modulated waveform 832a is sent to summer 804. Summer 804 adds modulated waveform 832 and waveforms 832b-832n produced by transceiver paths 804b-804n. This operation results in a combined signal 834, which is sent to output interface 805.

Output interface 805 up converts combined signal 834 from baseband to an IF, thereby generating forward link IF signal 722. Output interface 805 may additionally perform filtering and amplification operations in the generation of IF signal 722.

## IV. Conclusion

While various embodiments have been described above, it should be understood that they have been presented by way of example only, and not limitation. For example, the present invention is not limited to satellite-based communications systems, but also may be applied to terrestrial-based systems. Furthermore, the present invention is not limited to CDMA systems, but may be extended to other types of communications systems, such as TDMA FDMA, CDMA2000, and WCDMA systems. Moreover, while the embodiments describe wireless CDMA transmission in the context of QPSK modulation, other modulation techniques may be employed.

It will be understood by those skilled in the art that various changes in form and details may be made therein without departing from the spirit and scope of the invention as defined in the claims. Thus, the scope of the present invention should not be limited by any of the above-described exemplary embodiments, but should be defined only in accordance with the following claims.

## Claims

1. A method of controlling and setting forward link transmission power to a user terminal (124) in a wireless communications system (100) having a plurality of beams (204) in order to keep an interference level within acceptable ranges, **characterised in that** it comprises the steps of:

   (a) identifying the location of a user terminal (124) within a beam crossover region or a beam central region of one of the plurality of beams (204); and
   (b) setting the forward link transmission power in response to the identified user terminal location,

   wherein
   the forward link transmission power is set greater when the user is located in the beam crossover region as compared to the beam central region.

2. The method of claim 1, wherein step (a) comprises:

   (1) receiving from the user terminal (124) a plurality of signal power measurements, wherein each of the signal power measurements corresponds to one of the plurality of beams (204);

(2) calculating the differences between a first of the signal power measurements and each of the other signal power measurements, wherein the first signal power measurement corresponds to a home beam (204);

(3) concluding that the user terminal (124) is within a beam central region (206) when the largest of the calculated differences is greater than a predetermined threshold; and

(4) concluding that the user terminal (124) is within a beam crossover region (208) when the largest of the calculated differences is less than or equal to the predetermined threshold.

3. The method of claim 2, wherein step (1) comprises receiving from the user terminal a plurality of pilot signal power measurements, wherein each pilot signal power measurement corresponds to a respective one of the plurality of beams (204).

4. The method of claim 2, wherein step (1) comprises receiving a pilot strength measurement message (PSMM).

5. The method of any of claims 1 to 4, wherein step (b) comprises:

(1) setting the forward link transmission power to a first power level when the identified location is within a beam crossover region; and

(2) setting the forward link transmission power to a second power level when the identified location is within a beam central region.

6. The method of claim 5, wherein the first power level is greater than the second power level.

7. Apparatus for controlling and setting forward link transmission power to a user terminal (124) in a wireless communications system (100) having a plurality of beams (204) in order to keep an interference level within acceptable ranges, **characterised in that** it comprises:

a selector (718) adapted to identify the location of a user terminal (124) within a beam crossover region or a beam central region of one of the plurality of beams (204) and generate a power control command (730) based on the identified location; and

a transceiver (710) adapted to set the forward link transmission power in response to the power control command (730),

wherein

the forward link transmission power is set greater when the user is located in the beam crossover region as compared to the beam central region.

8. The apparatus of claim 7, wherein the transceiver (710) includes a gain module (810) that is adapted to scale a forward link information sequence according to a power level designated by the power control command (730).

9. The apparatus of claim 7, wherein the selector (718) is further adapted to generate a power control command (730) that designates a first power level when the identified location is within a beam crossover region (208) and a second power level when the identified location is within a beam central region (206).

10. The apparatus of claim 9, wherein the first power level is greater than the second power level.

11. Apparatus for controlling and setting forward link transmission power to a user terminal (124) in a wireless communications system (100) having a plurality of beams (204) in order to keep an interference level within acceptable ranges, **characterised in that** it comprises:

means for receiving from the user terminal (124) a plurality of signal power measurements, wherein each power measurement corresponds to a respective one of the plurality of beams (204);

means for calculating the differences between a first signal power measurement and each of the other signal power measurements, wherein the first signal power measurement corresponds to a home beam (204);

means for concluding that the user terminal (124) is within a beam central region (206) when the largest of the calculated differences is greater than a predetermined threshold; and

means for concluding that the user terminal (124) is within a beam crossover region (208) when the largest of the calculated differences is less than or equal to the predetermined threshold;

means for setting the forward link transmission power to a first power level when the identified location is within a beam crossover region (208); and
means for setting the forward link transmission power to a second power level when the identified location is within a beam central region (206),

**12.** The apparatus of claim 11, wherein said receiving means comprises means for receiving from the user terminal (124) a plurality of pilot signal power measurements, wherein each of the pilot signal power measurements corresponds to one of the plurality of beams (204).

**13.** The apparatus of claim 11, wherein said receiving means comprises means for receiving a pilot strength measurement message (PSMM).

**14.** The apparatus of claim 11, wherein the first power level is greater than the second power level.

**Patentansprüche**

**1.** Ein Verfahren zum Steuern und Setzen einer Vorwärtsverbindungsübertragungleistung zu einem Benutzerendgerät (124) in einem drahtlosen Kommunikationssystem (100), welches eine Mehrzahl von Strahlen (204) hat, um ein Interferenzniveau in einer akzeptablen Spanne zu halten, **dadurch gekennzeichnet, dass** es die Schritte umfasst:

(a) Erkennen des Ortes eines Benutzerendgerätes (124) in einem Strahlüberschneidungsbereich oder einem Strahlmittenbereich von einem von der Mehrzahl von Strahlen (204); und
(b) Setzen der Vorwärtsverbindungsübertragungleistung als Antwort auf den erkannten Benutzerendgeräteort

wobei
die Vorwärtsverbindungsübertragungleistung größer gesetzt wird wenn der Benutzer sich in dem Strahlüberschneidungsbereich befindet verglichen mit dem Strahlmittenbereich.

**2.** Das Verfahren von Anspruch 1, wobei Schritt (a) umfasst:

(1) Empfangen von dem Benutzerendgerät (124) einer Mehrzahl von Signalleistungsmessungen, wobei jede der Signalleistungsmessungen einem von der Mehrzahl von Strahlen (204) entspricht;
(2) Berechnen der Differenzen zwischen einer ersten von den Signalleistungsmessungen und jeder von den anderen Signalleistungsmessungen, wobei die erste Signalleistungsmessung einem Heimatstrahl (204) entspricht;
(3) Folgern dass das Benutzerendgerät (124) in einem Strahlmittenbereich (206) ist, wenn die größte der berechneten Differenzen größer als ein vorbestimmter Grenzwert ist; und
(4) Folgern dass das Benutzerendgerät (124) in einem Strahlüberschneidungsbereich (208) ist, wenn die größte der berechneten Differenzen kleiner oder gleich dem vorbestimmten Grenzwert ist.

**3.** Das Verfahren von Anspruch 2, wobei Schritt (1) umfasst das Empfangen von dem Benutzerendgerät eine Mehrzahl von Pilotsignalleistungsmessungen, wobei jede Pilotsignalleistungsmessung einem entsprechenden von der Mehrzahl von Strahlen (204) entspricht.

**4.** Das Verfahren von Anspruch 2, wobei Schritt (1) umfasst das Empfangen einer Pilotenstärkemessungsnachricht (pilot strength measurement message, PSMM).

**5.** Das Verfahren von einem von den Ansprüchen 1 bis 4, wobei Schritt (b) umfasst:

(1) Setzen der Vorwärtsverbindungsübertragungleistung auf ein erstes Leistungsniveau, wenn der erkannte Ort in einem Strahlüberschneidungsbereich ist; und
(2) Setzen der Vorwärtsverbindungsübertragungleistung auf ein zweites Leistungsniveau, wenn der erkannte Ort in einem Strahlmittenbereich ist.

**6.** Das Verfahren von Anspruch 5, wobei das erste Leistungsniveau größer ist als das zweite Leistungsniveau.

**7.** Vorrichtung zum Steuern und Setzen einer Vorwärtsverbindungsübetragungsleistung zu einem Benutzerendgerät (124) in einem drahtlosen Kommunikationssystem (100), welches eine Mehrzahl von Strahlen (204) hat, um ein Interferenzniveau in einer akzeptablen Spanne zu halten, **dadurch gekennzeichnet, dass** es umfasst:

> einen Selektor (718), welcher angepasst ist, den Ort von einem Benutzerendgerät (124) in einem Strahlüberschneidungsbereich oder einem Strahlmittenbereich von einem von der Mehrzahl von Strahlen (204) zu erkennen und einen Leistungssteuerungsbefehl (730) zu erzeugen gestützt auf den erkannten Ort; und
> eine Sendeempfangseinrichtung (710), welche angepasst ist, die Vorwärtsverbindungsübertragungleistung als Antwort auf den Leistungssteuerungsbefehl (730) zu setzen,

> wobei
> die Vorwärtsverbindungsübertragungleistung größer gesetzt wird wenn der Benutzer sich in dem Strahlüberschneidungsbereich befindet verglichen mit dem Strahlmittenbereich.

**8.** Die Vorrichtung von Anspruch 7, wobei die Sendeempfangseinrichtung (710) ein Verstärkungsmodul (810) beinhaltet, welches angepasst ist eine Vorwärtsverbindungsinformationssequenz zu skalieren gemäß einem durch den Leistungssteuerungsbefehl (730) bestimmten Leistungsniveau.

**9.** Die Vorrichtung von Anspruch 7, wobei der Selektor (718) weiter angepasst ist, einen Leistungssteuerungsbefehl zu erzeugen, welcher ein erstes Leistungsniveau bestimmt wenn der erkannt Ort in einem Strahlüberschneidnungsbereich (208) ist und ein zweites Leistungsniveau wenn der erkannte Ort in einem Strahlmittenbereich (206) ist.

**10.** Die Vorrichtung von Anspruch 9, wobei das erste Leistungsniveau größer ist als das zweite Leistungsniveau.

**11.** Vorrichtung zum Steuern und Setzen einer Vorwärtsverbindungsübetragungsleistung zu einem Benutzerendgerät (124) in einem drahtlosen Kommunikationssystem (100), welches eine Mehrzahl von Strahlen (204) hat, um ein Interferenzniveau in einer akzeptablen Spanne zu halten, **dadurch gekennzeichnet, dass** es umfasst:

> Mittel zum Empfangen von dem Benutzerendgerät (124) einer Mehrzahl von Signalleistungsmessungen, wobei jede Leistungsmessung einem entsprechenden von der Mehrzahl von Strahlen (204) entspricht;
> Mittel zum Berechnen der Differenzen zwischen einer ersten Signalleistungsmessung und jeder von den anderen Signalleistungsmessungen, wobei die erste Signalleistungsmessung einem Heimatstrahl (204) entspricht;
> Mittel zum Folgern dass das Benutzerendgerät (124) in einem Strahlmittenbereich (206) ist, wenn die größte der berechneten Differenzen größer als ein vorbestimmter Grenzwert ist; und
> Mittel zum Folgern dass das Benutzerendgerät (124) in einem Strahlüberschneidungsbereich (208) ist, wenn die größte der berechneten Differenzen kleiner oder gleich dem vorbestimmten Grenzwert ist;
> Mittel zum Setzen der Vorwärtsverbindungsübertragungleistung auf ein erstes Leistungsniveau, wenn der erkannte Ort in einem Strahlüberschneidungsbereich (208) ist; und
> Mittel zum Setzen der Vorwärtsverbindungsübertragungleistung auf ein zweites Leistungsniveau, wenn der erkannte Ort in einem Strahlmittenbereich (206) ist.

**12.** Die Vorrichtung von Anspruch 11, wobei das Mittel zum Empfangen Mittel umfasst zum Empfangen von dem Benutzerendgerät (124) einer Mehrzahl von Pilotsignalleistungsmessungen, wobei jede der Pilotsignalleistungsmessungen einem von der Mehrzahl von Strahlen (204) entspricht.

**13.** Die Vorrichtung von Anspruch 11, wobei das Mittel zum Empfangen Mittel umfasst zum Empfangen einer Pilotenstärkemessungsnachricht (pilot strength measurement message, PSMM).

**14.** Die Vorrichtung von Anspruch 11, wobei das erste Leistungsniveau größer ist als das zweite Leistungsniveau.

**Revendications**

**1.** Procédé pour commander et régler une puissance d'émission de liaison aller vers un terminal utilisateur (124) dans un système de communication sans fil (100) ayant une pluralité de faisceaux (204) afin de maintenir un niveau de brouillage dans des plages acceptables, **caractérisé en ce qu'**il comprend les étapes consistant à :

> (a) identifier l'emplacement d'un terminal utilisateur (124) à l'intérieur d'une région de chevauchement de faisceaux ou d'une région centrale de faisceau d'un parmi la pluralité de faisceaux (204) ; et
> (b) régler la puissance d'émission de liaison aller en réponse à l'emplacement identifié du terminal utilisateur,

dans lequel
la puissance d'émission de liaison aller est réglée de façon à être plus importante lorsque l'utilisateur est situé dans la région de chevauchement de faisceaux par comparaison avec la région centrale de faisceau.

2. Procédé selon la revendication 1, dans lequel l'étape (a) comprend les étapes consistant à :

(1) recevoir du terminal utilisateur (124) une pluralité de mesures de puissance de signaux, dans lequel chacune des mesures de puissance de signaux correspond à un parmi la pluralité de faisceaux (204) ;
(2) calculer les différences entre une première parmi les mesures de puissance de signaux et chacune parmi les autres mesures de puissance de signaux, dans lequel la première mesure de puissance de signaux correspond à un faisceau de départ (204) ;
(3) conclure que le terminal utilisateur (124) se trouve dans une région centrale (206) de faisceau lorsque la différence la plus importante parmi les différences calculées est supérieure à un seuil prédéterminé ; et
(4) conclure que le terminal utilisateur (124) se trouve dans une région de chevauchement (208) de faisceaux lorsque la différence la plus importante parmi les différences calculées est inférieure ou égale au seuil prédéterminé.

3. Procédé selon la revendication 2, dans lequel l'étape (1) comprend l'étape consistant à recevoir, du terminal utilisateur, une pluralité de mesures de puissance de signaux pilotes, dans lequel chaque mesure de puissance de signaux pilotes correspond à un respectif parmi la pluralité de faisceaux (204).

4. Procédé selon la revendication 2, dans lequel l'étape (1) comprend l'étape consistant à recevoir un message de mesure d'intensité pilote (PSMM).

5. Procédé selon l'une quelconque des revendications 1 à 4, dans lequel l'étape (b) comprend les étapes consistant à :

(1) régler la puissance d'émission de liaison aller sur un premier niveau de puissance lorsque l'emplacement identifié se trouve dans une région de chevauchement de faisceaux ; et
(2) régler la puissance d'émission de liaison aller sur un second niveau de puissance lorsque l'emplacement identifié se trouve dans une région centrale de faisceau.

6. Procédé selon la revendication 5, dans lequel le premier niveau de puissance est supérieur au second niveau de puissance.

7. Appareil destiné à commander et régler une puissance d'émission de liaison aller vers un terminal utilisateur (124) dans un système de communication sans fil (100) ayant une pluralité de faisceaux (204) afin de maintenir un niveau de brouillage dans des plages acceptables, **caractérisé en ce qu'**il comprend :

un sélecteur (718) adapté pour identifier l'emplacement d'un terminal utilisateur (124) à l'intérieur d'une région de chevauchement de faisceaux ou d'une région centrale de faisceau d'un parmi la pluralité de faisceaux (204) et générer un ordre de commande de puissance (730) sur la base de l'emplacement identifié ; et
un émetteur-récepteur (710) adapté pour régler la puissance d'émission de liaison aller en réponse à l'ordre de commande de puissance (730),

dans lequel
la puissance d'émission de liaison aller est réglée de façon à être plus importante lorsque l'utilisateur est situé dans la région de chevauchement de faisceaux par comparaison avec les régions centrales de faisceau.

8. Appareil selon la revendication 7, dans lequel l'émetteur-récepteur (710) comporte un module de gain (810) qui est adapté pour mettre à l'échelle une séquence d'informations de liaison aller selon un niveau de puissance indiqué par l'ordre de commande de puissance (730).

9. Appareil selon la revendication 7, dans lequel le sélecteur (718) est en outre adapté pour générer un ordre de commande de puissance (730) qui indique un premier niveau de puissance lorsque l'emplacement identifié se trouve dans une région de chevauchement (208) de faisceaux et un second niveau de puissance lorsque l'emplacement identifié se trouve dans une région centrale (206) de faisceau.

10. Appareil selon la revendication 9, dans lequel le premier niveau de puissance est supérieur au second niveau de puissance.

11. Appareil destiné à commander et régler une puissance d'émission de liaison aller vers un terminal utilisateur (124) dans un système de communication sans fil (100) ayant une pluralité de faisceaux (204) afin de maintenir un niveau de brouillage dans des plages acceptables, **caractérisé en ce qu'**il comprend :

   un moyen destiné à recevoir du terminal utilisateur (124) une pluralité de mesures de puissance de signaux, dans lequel chaque mesure de puissance correspond à un respectif parmi la pluralité de faisceaux (204) ;
   un moyen destiné à calculer des différences entre une première mesure de puissance de signaux et chacune parmi les autres mesures de puissance de signaux, dans lequel la première mesure de puissance de signaux correspond à un faisceau de départ(204) ;
   un moyen destiné à conclure que le terminal utilisateur (124) se trouve dans une région centrale (206) de faisceau lorsque la différence la plus importante parmi les différences calculées est supérieure à un seuil prédéterminé ; et
   un moyen destiné à conclure que le terminal utilisateur (124) se trouve dans une région de chevauchement (208) de faisceaux lorsque la différence la plus importante parmi les différences calculées est inférieure ou égale au seuil prédéterminé ;
   un moyen destiné à régler la puissance d'émission de liaison aller sur un premier niveau de puissance lorsque l'emplacement identifié se trouve à l'intérieur d'une région de chevauchement (208) de faisceau ; et
   un moyen destiné à régler la puissance d'émission de liaison aller sur un second niveau de puissance lorsque l'emplacement identifié se trouve dans une région centrale (206) de faisceau.

12. Appareil selon la revendication 11, dans lequel ledit moyen de réception comprend un moyen destiné à recevoir, du terminal utilisateur (124), une pluralité de mesures de puissance de signaux pilotes, dans lequel chacune des mesures de puissance de signaux pilotes correspond à un parmi la pluralité de faisceaux (204).

13. Appareil selon la revendication 11, dans lequel ledit moyen de réception comprend un moyen destiné à recevoir un message de mesure d'intensité pilote (PSMM).

14. Appareil selon la revendication 11, dans lequel le premier niveau de puissance est supérieur au second niveau de puissance.

FIG. 1

FIG. 2

FIG. 3

**FIG. 4**

404

```
          ┌──────────┐
          │  Begin   │
          └──────────┘
                │
                ▼
              ╱────╲        502
            ╱        ╲
          ╱  Is user   ╲
 No     ╱   terminal     ╲    Yes
◄──────╱  within crossover ╲──────►
        ╲    region?      ╱
          ╲             ╱
            ╲         ╱
              ╲─────╱
```

```
No                          Yes

┌─────────────────┐  504   ┌─────────────────┐  506
│  Set forward    │        │  Set forward    │
│  link transmit  │        │  link transmit  │
│  power to a     │        │  power to a     │
│  first power    │        │  second power   │
│  level          │        │  level          │
└─────────────────┘        └─────────────────┘
         │                          │
         └──────────┐    ┌──────────┘
                    ▼    ▼
                 ┌─────────┐
                 │   End   │
                 └─────────┘
```

**FIG. 5**

```
                        ┌─────────────┐
                        │    Begin    │
                        └──────┬──────┘
                               │
                               ▼
              ┌─────────────────────────────────┐
              │ Gateway receives a list of pilot │      602
              │ signal power measurements        │
              │ from the user terminal           │
              └────────────────┬─────────────────┘
                               │
                               ▼
          ┌───────────────────────────────────────┐
          │ Gateway calculates the difference between │   604
          │ the home beam pilot signal power and the │
          │ next highest pilot signal power          │
          └──────────────────┬────────────────────┘
                             │
                             ▼
                        606
                      ╱        ╲
           No       ╱ Is the    ╲      Yes
      ┌────────────╱ calculated   ╲────────────┐
      │           ╲ difference > a ╱            │
      │            ╲  threshold   ╱             │
      │             ╲   value?   ╱              │
      │              ╲         ╱                │
      ▼                                         ▼
┌──────────────┐ 608              610 ┌──────────────┐
│ Conclude user │                     │ Conclude user │
│ terminal is within│                 │ terminal is within│
│ crossover region │                  │ central region │
└───────┬──────┘                      └───────┬──────┘
        │                                     │
        │            ┌─────────┐              │
        └───────────▶│   End   │◀─────────────┘
                     └─────────┘
```

## FIG. 6

**FIG. 7**

To RF Subsystem
704

722

Output
Interface 805

834

804

Summer

832b 802b 724b

832n 802n 724n

730a

802a

Transceiver Path 724a

Gain Module 810 Interleaver 806 Encoder 808

824 820 822

816

Channelizing
Code

PN Sequence

830a 836a 834a 826a

814a 812a

832a QPSK
Modulator

830b 826b

814b 812b

828a

828b

836b 834b

Channelizing
Code

PN Sequence

**FIG. 8**

**EP 1 442 535 B1**

**REFERENCES CITED IN THE DESCRIPTION**

**Patent documents cited in the description**

- US 4901307 A
- US 5691174 A
- US 5907809 A
- US 5918176 A
- EP 1098456 A
- US 5056109 A